# FASCICULE DE BREVET EUROPEEN

(11) **EP 0 963 894 B1**
(45) Date de publication et mention de la délivrance du brevet: **13.11.2002**
(21) Numéro de dépôt: 99401242.5
(22) Date de dépôt: 21.05.1999
(51) Int. Cl.: B60T 8/36

(54) **Dispositif pour la fixation d'une unité hydraulique, notamment d'un système antiblocage de roues, dans le compartiment moteur d'un véhicule automobile**
Vorrichtung zur Befestigung einer Hydraulikeinheit, insbesondere eines Antiblockier-Bremssystems, im Motorraum eines Kraftfahrzeuges
Device for mounting a hydraulic unit, especially of an antilock brake system, in the engine compartment of an automoive vehicle

(30) Priorité: 12.06.1998 FR 9807454
(43) Date de publication de la demande: 15.12.1999
(73) Titulaire: AUTOMOBILES PEUGEOT, 75116 Paris (FR); AUTOMOBILES CITROEN, 92200 Neuilly-sur-Seine (FR)
(72) Inventeur: Guelon, Jean-Olivier, 75018 Paris (FR)
(74) Mandataire: Thinat, Michel

(56) Documents cités:
- EP-A- 0 456 991
- EP-A- 0 559 210
- WO-A-94/26568
- DE-A- 4 405 441
- DE-C- 818 284
- DE-C- 3 941 401
- DE-C- 4 324 099
- PATENT ABSTRACTS OF JAPAN vol. 007, no. 177 (M-233), 5 août 1983 (1983-08-05) -& JP 58 081248 A (HITACHI KINZOKU KK;OTHERS: 01), 16 mai 1983 (1983-05-16)

## Description

La présente invention concerne un dispositif pour la fixation d'une unité hydraulique, notamment d'un système antiblocage de roues, dans le compartiment moteur d'un véhicule automobile.

Un tel dispositif est connu des document DE-A-4 324 099.

On connaît de tels dispositifs qui ont pour inconvénients majeurs d'utiliser des moyens de fixation du corps de l'unité hydraulique à la caisse du véhicule relativement complexes, rendant le montage de ce bloc à la caisse du véhicule fastidieux, et de ne pas filtrer efficacement les bruits engendrés par le bloc de l'unité hydraulique.

L'invention a pour but d'éliminer les inconvénients ci-dessus en proposant un dispositif pour la fixation d'une unité hydraulique, notamment d'un système antiblocage de roues, dans le compartiment moteur d'un véhicule automobile et qui est caractérisé en ce qu'il comprend au moins deux pions d'ancrage parallèles espacés solidaires du bloc de l'unité hydraulique et pouvant être fixés à un support solidaire de la caisse du véhicule par l'intermédiaire respectivement de deux liaisons élastiques.

De préférence, les deux liaisons élastiques sont en forme de tubes emmanchés respectivement sur les deux pions d'ancrage pour permettre leur libre introduction dans une ouverture d'une partie en forme de plaque de support et leur fixation dans l'ouverture par rotation dans un sens déterminé de l'ensemble comprenant les pions d'ancrage et les liaisons élastiques relativement au support de façon à engager à force les liaisons élastiques respectivement dans deux découpes concaves distinctes de l'ouverture dont les bords respectifs sont disposés de telle façon qu'ils déforment radialement les deux liaisons élastiques vers leurs pions d'ancrage respectifs.

Chaque pion d'ancrage comprend une gorge dans la partie radialement externe de laquelle s'engage par déformation élastique la portion correspondante de tube de l'élément élastique en position de fixation du bloc de l'unité hydraulique au support.

L'ouverture de la partie en forme de plaque de support comprend deux découpes concaves distinctes disposées de façon à permettre la libre introduction des pions d'ancrage et de leurs liaisons élastiques associées dans un sens perpendiculaire à la partie en forme de plaque de support et les deux découpes concaves de fixation des pions d'ancrage sont adjacentes respectivement aux deux découpes d'introduction de ceux-ci en étant raccordées l'une à l'autre par un bossage radialement interne formant butée de blocage du pion d'ancrage dans la découpe concave correspondante.

Les découpes sont chacune en forme d'arc de cercle et le rayon des découpes d'introduction des pions d'ancrage est supérieur au rayon des découpes de fixation de ceux-ci.

Les découpes concaves d'introduction des pions d'ancrage s'inscrivent dans un cercle d'un diamètre supérieur à celui du cercle dans lequel s'inscrivent les découpes de fixation de ces pions d'ancrage.

De préférence, le dispositif comprend trois pions d'ancrage sur lesquels sont emmanchées respectivement trois liaisons élastiques tubulaires et pouvant être fixés respectivement dans trois découpes concaves distinctes de l'ouverture de la partie formant plaque de support.

Les trois découpes de fixation des pions d'ancrage sont espacées angulairement les unes des autres suivant des angles différents pour permettre la fixation selon une orientation prédéterminée du bloc de l'unité hydraulique au support fixe.

De préférence, les liaisons élastiques sont en un matériau à base de caoutchouc.

Chaque tube d'une liaison élastique comprend une collerette pouvant venir en appui sur la partie en forme de plaque du support pour positionner les liaisons élastiques relativement au support de façon à permettre la fixation des pions d'ancrage dans les découpes correspondantes lors du mouvement de rotation dans le sens déterminé.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue éclatée en perspective représentant les différents moyens du dispositif de l'invention permettant la fixation d'une unité hydraulique, notamment d'un système antiblocage de roues, dans le compartiment moteur d'un véhicule automobile.

La figure 2 est une vue de dessus suivant la flèche II de la figure 1 d'une partie en forme de plaque d'un support faisant partie du dispositif de l'invention.

La figure 3 représente le mode de montage du dispositif de fixation de l'invention.

La figure 4 est une vue en coupe dans le plan vertical contenant la ligne brisée IV-IV de la figure 2 et représentant le dispositif en position de fixation de l'unité hydraulique dans le compartiment moteur du véhicule.

Le dispositif de l'invention qui va être décrit permet la fixation d'une unité hydraulique (non représentée) d'un système antiblocage de roues dans le compartiment moteur d'un véhicule automobile.

Ce dispositif peut être également utilisé pour fixer l'unité hydraulique d'un système de régulation antipatinage des roues d'un véhicule automobile, sans sortir du cadre de la présente invention.

En se reportant aux figures, le dispositif comprend trois pions d'ancrage rigides 1 de forme générale cylindrique et solidaires, de façon appropriée par exemple par soudage, d'une plaque rigide 2 devant être fixée à la paroi de fond du bloc de l'unité hydraulique à fixer dans le compartiment moteur du véhicule. Selon une variante, les pions d'ancrage 1 peuvent être directement fixés à la paroi de fond du bloc hydraulique.

Le dispositif comprend en outre trois liaisons élastiques 3, chacune en forme de tube, pouvant s'emmancher respectivement sur les trois pions d'ancrage 1. De préférence, chaque liaison élastique 3 est réalisée en un matériau à base de caoutchouc.

Le dispositif comprend enfin une partie en forme de plaque rigide 4 d'un support fixé à la caisse du véhicule (non représentée). La plaque 4 comprend une ouverture 5 permettant le passage des pions d'ancrage 1 sur lesquels sont emmanchées les liaisons élastiques 3 jusqu'à une distance ou hauteur prédéterminée de la plaque de support 2 des pions d'ancrage 1 à laquelle les pions d'ancrage 1 peuvent être fixés à la plaque 4 par simple rotation dans un sens déterminé de l'ensemble constitué par la plaque 2, les pions d'ancrage 3 et les liaisons élastiques 3 relativement à la plaque 4. Plus précisément, l'ouverture 5 de la plaque 4 présente tout d'abord trois découpes concaves distinctes identiques 6, de préférence en forme d'arc de cercle, disposées dans la plaque 4 de façon à permettre le libre passage respectivement des trois pions d'ancrage 1 et de leurs liaisons élastiques 3 dans une direction perpendiculaire à la plaque 4. L'ouverture 5 comprend en outre trois autres découpes concaves distinctes et identiques 7 permettant, comme on le verra ultérieurement, de bloquer ou verrouiller les pions d'ancrage 1 à la plaque 4. Les trois découpes 7, de préférence en forme d'arc de cercle, sont situées dans la plaque 4 de façon adjacente respectivement aux découpes 6, deux découpes adjacentes 6, 7 définissant entre elles un bossage arrondi radialement interne 8 permettant le blocage d'un pion d'ancrage 1 dans la découpe 7.

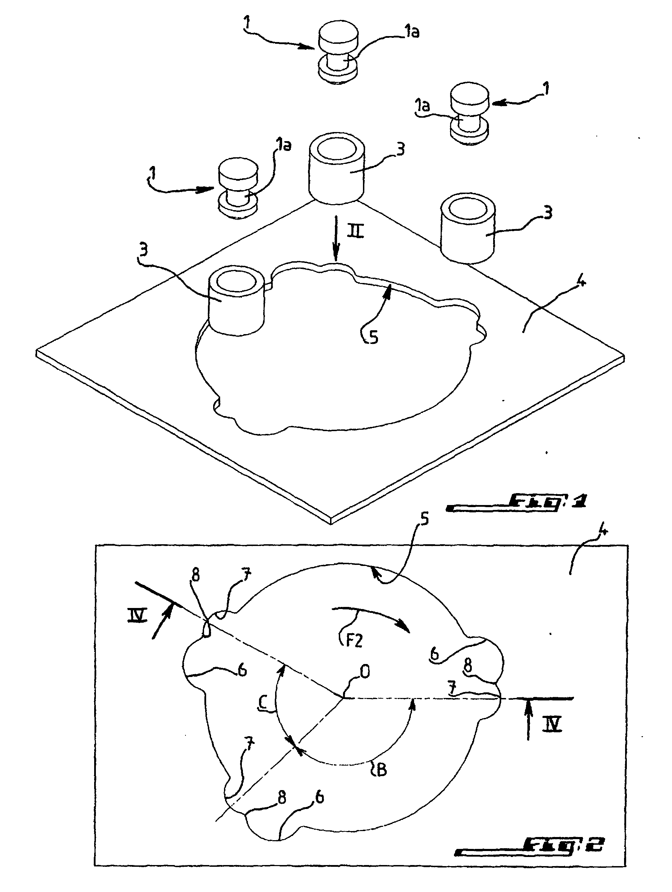

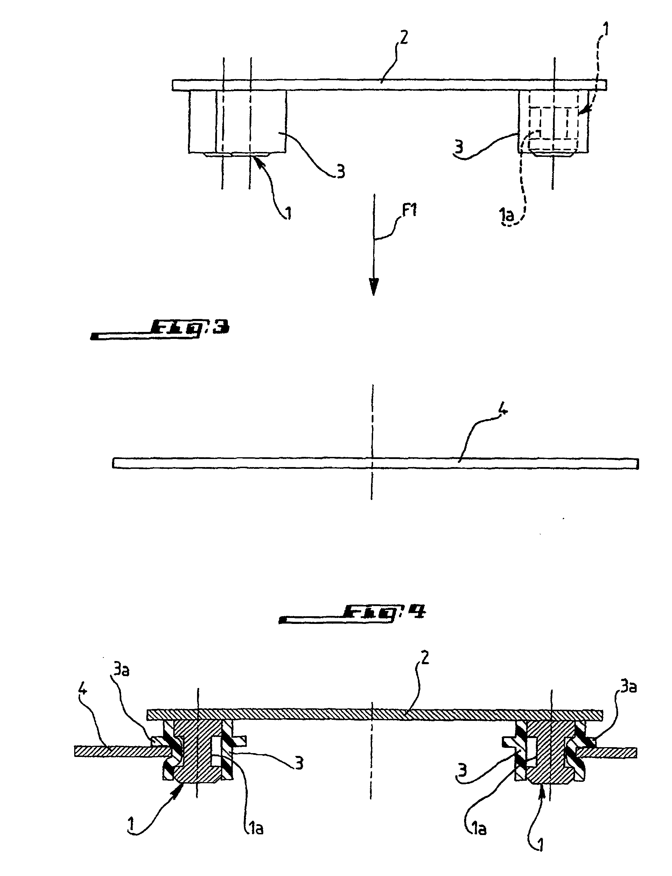

Comme cela ressort notamment de la figure 2, les découpes 6 peuvent être inscrites dans un cercle d'un diamètre supérieur au diamètre du cercle dans lequel peuvent être inscrites les découpes 7 qui ont chacune un rayon plus petit que le rayon des découpes 6. La figure 2 montre également, à titre préférentiel, que les découpes 7, tout comme les découpes 6, sont espacées angulairement sur la plaque 4 relativement au centre O de l'ouverture 5 suivant des angles B et C différents, l'angle B étant dans le cas présent supérieur à l'angle C, de façon à fixer le bloc de l'unité hydraulique au support fixe de la caisse du véhicule suivant une orientation prédéterminée.

Chaque pion d'ancrage 1 comporte une gorge la à section transversale en forme de U dans une partie radialement externe de laquelle peut être déformée une portion correspondante de tube de la liaison élastique 3 emmanchée sur ce pion d'ancrage en position de fixation de l'unité hydraulique dans le compartiment moteur du véhicule.

Le mode de fixation de l'unité hydraulique du système antiblocage de roues dans le compartiment moteur du véhicule résulte déjà de la description ci-dessus et va être maintenant expliqué.

L'ensemble constitué par la plaque 2, les pions d'ancrage 1 et les liaisons élastiques 3 solidaire du bloc de l'unité hydraulique est présenté au-dessus de la plaque 4 de façon que les liaisons élastiques 3 soient en aplomb respectivement des trois découpes 6. En déplaçant cet ensemble dans le sens vertical vers la plaque 4 comme indiqué par la flèche F1 en figure 3, les trois liaisons élastiques 3 sont introduites librement dans les trois découpes 6 jusqu'à une hauteur prédéterminée de la plaque 2 relativement à la plaque 4 telle que les gorges la des pions d'ancrage 1 soient sensiblement au même niveau que les bords des découpes 6. A cette position, il suffit à l'opérateur de tourner dans le sens indiqué par la flèche F2 l'ensemble ci-dessus de façon à engager à force les liaisons élastiques 3 respectivement dans les trois découpes 7 pour bloquer les pions d'ancrage 1 dans celles-ci. La figure 4 montre qu'en position de fixation des pions d'ancrage 1 dans les découpes respectives 7, chaque portion de tube d'un élément élastique 3 en contact intime avec le bord correspondant de la découpe 7 est engagée par déformation dans la partie de la gorge la radialement externe du pion d'ancrage correspondant 1 de façon à retenir rigidement les pions d'ancrage 1 à la plaque 4.

Pour permettre à l'opérateur de positionner précisément les pions d'ancrage 1 relativement aux découpes 6, 7 avant d'effectuer le mouvement de rotation suivant la flèche F2, chaque liaison élastique 3 emmanchée sur le pion d'ancrage correspondant 1 peut être pourvue d'une collerette 3a comme représenté en figure 4 venant en appui sur la plaque 4.

Le dispositif de l'invention permet de fixer facilement et rapidement l'unité hydraulique d'un système antiblocage de roues dans le compartiment moteur d'un véhicule automobile à une position relative souhaitée. Ce dispositif est d'une structure simple et rend quasiment impossible le retrait de l'unité hydraulique du support solidaire de la caisse du véhicule dans le sens opposé à la flèche F1. Enfin, la présence des liaisons élastiques tubulaires 3 permet de filtrer efficacement les bruits engendrés par le bloc de l'unité hydraulique.

## Revendications

1. Dispositif pour la fixation d'une unité hydraulique, notamment d'un système antiblocage de roues, dans le compartiment moteur d'un véhicule automobile, **caractérisé en ce qu'**il comprend au moins deux pions d'ancrage parallèles et espacés (1) solidaires du bloc de l'unité hydraulique et pouvant être fixés à un support (4) solidaire de la caisse du véhicule par l'intermédiaire respectivement de deux liaisons élastiques (3) et **en ce que** les deux liaisons élastiques (3) sont en forme de tubes emmanchés respectivement sur les deux pions d'ancrage (1) pour permettre leur libre introduction dans une ouverture (5) d'une partie en forme de plaque (4) du support précité et leur fixation dans l'ouverture (5) par rotation dans un sens déterminé de l'ensemble comprenant les pions d'ancrage (1) et les liaisons élastiques (3) relativement au support de façon à engager à force les liaisons élastiques (3) respectivement dans deux découpes concaves distinctes (7) de l'ouverture (5) dont les bords respectifs sont disposés de telle façon qu'ils déforment radialement les deux liaisons élastiques (3) vers leurs pions d'ancrage respectifs (1).

2. Dispositif selon la revendication 1, **caractérisé en ce que** chaque pion d'ancrage (1) comprend une gorge (1a) dans la partie radialement externe de laquelle s'engage par déformation élastique la partie correspondante de tube de l'élément élastique (3) en position de fixation du bloc de l'unité hydraulique au support (4).

3. Dispositif selon la revendication 1 ou 2, **caractérisé en ce que** l'ouverture (5) précitée comprend deux découpes concaves distinctes (6) disposées de façon à permettre la libre introduction des pions d'ancrage (1) et de leurs liaisons élastiques associées (3) dans un sens perpendiculaire à la partie en forme de plaque (4) du support et les deux découpes concaves de fixation (7) des pions d'ancrage (1) sont adjacentes respectivement aux deux découpes d'introduction (6) de ceux-ci en étant raccordées l'une à l'autre par un bossage radialement interne (8) formant butée de blocage du pion d'ancrage (1) dans la découpe concave correspondante (7).

4. Dispositif selon la revendication 3, **caractérisé en ce que** les découpes (6, 7) sont chacune en forme d'arc de cercle et le rayon des découpes d'introduction (6) des pions d'ancrage (1) est supérieur au rayon des découpes de fixation (7) des pions d'ancrage (1).

5. Dispositif selon l'une des revendications 1 à 4, **caractérisé en ce que** les découpes d'introduction .(6) des pions d'ancrage (1) s'inscrivent dans un cercle d'un diamètre supérieur à celui du cercle dans lequel s'inscrivent les découpes de fixation (7) de ces pions d'ancrage (1).

6. Dispositif selon la revendication 5, **caractérisé en ce qu'**il comprend trois pions d'ancrage (1) sur lesquels sont emmanchées respectivement trois liaisons élastiques tubulaires (3) et pouvant être fixées respectivement dans trois découpes concaves distinctes (7).

7. Dispositif selon la revendication 6, **caractérisé en ce que** les trois découpes de fixation (7) des pions d'ancrage (1) sont espacées angulairement les unes des autres suivant des angles différents pour permettre la fixation selon une orientation prédéterminée du bloc de l'unité hydraulique au support fixe (4).

8. Dispositif selon l'une des revendications précédentes, **caractérisé en ce que** les liaisons élastiques (3) sont en un matériau à base de caoutchouc.

9. Dispositif selon l'une des revendications 1 à 8, **caractérisé en ce que** chaque tube d'une liaison élastique (3) comprend une collerette (3a) pouvant venir en appui sur la partie en forme de plaque (4) du support pour positionner les liaisons élastiques (3) relativement au support de façon à permettre la fixation des pions d'ancrage (1) dans les découpes correspondantes (7) lors du mouvement de rotation dans le sens déterminé précité.

## Patentansprüche

1. Vorrichtung zum Befestigen einer Hydraulikeinheit, insbesondere eines Antlblockier-Bremssystems, im Motorraum eines Kraftfahrzeugs, **dadurch gekennzeichnet, dass** sie zumindest zwei parallele und beabstandete Verankerungszapfen (1) aufweist, die fest mit dem Block der Hydraulikeinheit verbunden sind und an einem fest mit dem Fahrzeuggestell verbundenen Träger (4) jeweils mittels zweier elastischer Verbindungen (3) befestigt werden können, und dass die beiden elastischen Verbindungen (3) rohrförmig ausgeführt und jeweils auf einen der beiden Verankerungszapfen (1) aufgesteckt sind, um deren freies Einführen in eine Öffnung (5) eines plattenförmigen Teils (4) des genannten Trägers und deren Befestigen in der Öffnung (5) durch Drehen in einer Richtung der aus den Verankerungszapfen (1) und den elastischen Verbindungen (3) bestehenden Einheit gegenüber dem Träger so zu ermöglichen, dass die elastischen Verbindungen (3) zwangsweise jeweils in einen von zwei unterschiedlichen konkaven Ausschnitten (7) der Öffnung (5) eingeführt werden, deren jeweilige Ränder so angeordnet sind, dass sie die beiden elastischen Verbindungen (3) zu ihren jeweiligen Verankerungszapfen (1) hin radial verformen.

2. Vorrichtung nach Anspruch 1, **dadurch gekennzeichnet, dass** jeder Verankerungszapfen (1) eine Nut (1a) aufweist, in deren radial äußeren Bereich der entsprechende rohrförmige Bereich des elastischen Teils (3) in der am Träger (4) befestigten Stellung des Blocks der Hydraulikeinheit durch elastisches Verformen eingreift.

3. Vorrichtung nach Anspruch 1 oder 2, **dadurch gekennzeichnet, dass** die genannte Öffnung (5) zwei unterschiedliche konkave Ausschnitte (6) aufweist, die so angeordnet sind, dass sie das freie Einführen der Verankerungszapfen (1) und der diesen zugeordneten elastischen Verbindungen (3) in einer zum plattenförmigen Teil (4) des Trägers senkrechten Richtung ermöglichen, und dass die beiden konkaven Ausschnitte (7) zum Befestigen der Verankerungszapfen (1) an die beiden jeweiligen Ausschnitte (6) zum Einführen der letztgenannten angrenzen, indem sie durch eine radial innere Erhöhung (8) aneinander anschließen, die einen Sicherungsanschlag des Verankerungszapfens (1) im entsprechenden konkaven Ausschnitt (7) bildet.

4. Vorrichtung nach Anspruch 3, **dadurch gekennzeichnet, dass** die Ausschnitte (6, 7) jeweils kreisbogenförmig sind und der Radius der Ausschnitte (6) zum Einführen der Verankerungszapfen (1) größer ist als der Radius der Ausschnitte (7) zum Befestigen der Verankerungszapfen (1).

5. Vorrichtung nach einem der Ansprüche 1 bis 4, **dadurch gekennzeichnet, dass** die Ausschnitte (6) zum Einführen der Verankerungszapfen (1) einen Kreis beschreiben, dessen Durchmesser größer ist als der des Kreises, den die Ausschnitte (7) zum Befestigen dieser Verankerungszapfen (1) beschreiben.

6. Vorrichtung nach Anspruch 5, **dadurch gekennzeichnet, dass** sie drei Verankerungszapfen (1) enthält, an denen drei jeweilige elastische, rohrförmige Verbindungen aufgesteckt sind und in drei jeweilige unterschiedliche konkave Ausschnitte (7) befestigt werden können:

7. Vorrichtung nach Anspruch 6, **dadurch gekennzeichnet, dass** die drei Ausschnitte (7) zum Befestigen der Verankerungszapfen (1) mit unterschiedlichen Winkeln voneinander beabstandet sind, um die Befestigung gemäß einer vorbestimmten Orientierung des Blocks der Hydraulikeinheit am feststehenden Träger (4) zu ermöglichen.

8. Vorrichtung nach einem der vorangehenden Ansprüche, **dadurch gekennzeichnet, dass** die elastischen Verbindungen (3) aus einem Material auf Gummibasis bestehen.

9. Vorrichtung nach einer der Ansprüche 1 bis 8, **dadurch gekennzeichnet, dass** jedes Rohr einer elastischen Verbindung (3) einen Bund (3a) aufweist, der sich am plattenförmigen Teil (4) des Trägers abstützen kann, um die elastischen Verbindungen (3) relativ zum Träger so zu positionieren, dass sie bei der Drehbewegung in der genannten vorbestimmten Richtung die Befestigung der Verankerungszapfen (1) in den entsprechenden Ausschnitten (7) ermöglichen.

## Claims

1. Device for mounting a hydraulic unit, especially of an anti-locking brake system, in the engine compartment of a motor vehicle, **characterized in that** it comprises at least two anchor pins (1), parallel and spaced apart, integral with the body of the hydraulic unit and fixable to a support (4) integral with the body of the vehicle by means of two elastic joints (3) and **in that** the two elastic joints (3) are in the form of tubes slipped over the two anchor pins (1) so as to allow them to be freely inserted into an opening (5) in a plate-like part (4) of the aforesaid support and fixed in the opening (5) by rotation in a given direction of the assembly comprising the anchor pins (1) and the elastic joints (3) relative to the support so as to forcibly engage the elastic joints (3) in two distinct concave cutouts (7) of the opening (5) the edges of which are disposed in such a way as to radially deform the two elastic joints (3) towards their respective anchor pins(1).

2. Device according to claim 1, **characterized in that** each anchor pin (1) has a groove (1a) into the radially outer part of which the corresponding part of the tube of the elastic element (3) engages through elastic deformation in the fixing position of the body of the hydraulic unit to the support (4).

3. Device according to claim 1 or claim 2, **characterized in that** the aforesaid opening (5) has two distinct concave cutouts (6) disposed so as to allow the anchor pins(1) and their associated elastic joints (3) to be freely inserted in a direction perpendicular to the platelike part (4) of the support and the two concave cutouts (7) for fixing the anchor pins (1) are respectively adjacent to the two cutouts (6) for insertion of the latter, being linked to each other by a radially internal pump (8) forming a lock stop for the anchor pin (1) in the corresponding concave cutout (7).

4. Device according to claim 3, **characterized in that** the cutouts (6, 7) are each in the form of an arc of a circle and the radius of the cutouts (6) for insertion of the anchor pins (1) is greater than the radius of the cutouts (7) for fixing the anchor pins (1).

5. Device according to any one of claims 1 to 4, **characterized in that** the cutouts (6) for insertion of the anchor pins (1) are inscribed within a circle of greater diameter than the circle within which the cutouts (7) for fixing those anchor pins (1) are inscribed.

6. Device according to claim 5, **characterized in that** it comprises three anchor pins(1) over which three tubular elastic joints (3) are slipped and are fixable in three distinct concave cutouts (7).

7. Device according to claim 6, **characterized in that** the three cutouts (7) for fixing the anchor pins (1) are angularly spaced apart from one another at different angles so that the body of the hydraulic unit can be fixed to the fixed support (4) in a predetermined orientation.

8. Device according to any one of the preceding claims, **characterized in that** the elastic joints (3) are made of a rubber-based material.

9. Device according to any one of claims 1 to 8, **characterized in that** each tube of an elastic joint (3) has a collar (3a) able to come to bear on the platelike part (4) of the support to position the elastic joints (3) relative to the support so as to allow the anchor pins (1) to be fixed in the corresponding cutouts (7) upon rotation in the aforesaid given direction.
